## Europäisches Patentamt

## European Patent Office

## Office européen des brevets

(19)

(11) Veröffentlichungsnummer : **0 111 048**
**B1**

(12) **EUROPÄISCHE PATENTSCHRIFT**

(45) Veröffentlichungstag der Patentschrift :
26.04.89

(21) Anmeldenummer : 83107325.9

(22) Anmeldetag : 26.07.83

(51) Int. Cl.⁴ : **B 62 D 55/14**, B 21 D 53/26,
B 21 D 53/34

(54) **Laufrad für Kettenfahrzeuge.**

(30) Priorität : 11.12.82 DE 3245910

(43) Veröffentlichungstag der Anmeldung :
20.06.84 Patentblatt 84/25

(45) Bekanntmachung des Hinweises auf die Patenterteilung : 26.04.89 Patentblatt 89/17

(84) Benannte Vertragsstaaten :
**AT BE CH DE FR GB IT LI LU NL SE**

(56) Entgegenhaltungen :
FR–A– 2 160 418
GB–A– 1 099 881
GB–A– 2 020 236
GB–A– 2 025 333
GB–A– 2 044 640
US–A– 3 262 191
US–A– 3 270 402
US–A– 3 391 439

(73) Patentinhaber : **Hoesch Aktiengesellschaft**
**Eberhardstrasse 12**
**D-4600 Dortmund 1 (DE)**

(72) Erfinder : **Komp, Uwe, Dipl.-Ing.**
**Sommerbergweg 36**
**D-4600 Dortmund (DE)**
Erfinder : **Henke, Klaus, Dr.-Ing.**
**Schoofsweg 16**
**D-4600 Dortmund (DE)**
Erfinder : **Wozniak, Johannes, Dr.-Ing.**
**Weidegrund 57**
**D-4780 Lippstadt (DE)**

(74) Vertreter : **Happe, Otto, Dipl.-Ing.**
**Isselburger Strasse 12**
**D-5000 Köln 60 (DE)**

## Beschreibung

Die Erfindung betrifft ein aus zwei Hälften gebildetes Laufrad aus Stahl für Kettenfahrzeuge und ein Verfahren zur Herstellung eines derartigen Laufrades.

Laufräder der vorgenannten Art werden zur Übertragung des Bodendrucks der Kette auf das Fahrwerk des Kettenfahrzeugs eingesetzt. Besonders bei schnellfahrenden Kettenfahrzeugen für militärische Zwecke spielt die Ausbildung der Laufräder hinsichtlich Fahrverhalten und Verschleiß eine große Rolle. An die Laufräder werden daher erhebliche Anforderungen gestellt.

Um die ungefederten Massen des Kettenfahrwerks gering zu halten, damit bei möglichst geringer Erschütterung eine möglichst hohe Fahrgeschwindigkeit erreicht werden kann, muß das Gewicht der Laufräder niedrig gehalten werden. Ferner müssen die Laufräder wegen der sehr hohen Reibbeanspruchung im Zahneingriffsbereich verschleißfest sein. Desweiteren wird eine geringe Anfälligkeit gegen Beschuß gefordert.

Bei bekannten, aus Aluminium bestehenden Laufrädern bereitet die Erfüllung der erstgenannten Forderung — niedriges Gewicht — keine Schwierigkeiten. Zur Erfüllung der zweitgenannten Forderung — Verschleißfestigkeit im Zahneingriffsbereich — sind die aus Aluminium bestehenden Laufräder mit Verschleißringen aus hochfestem Stahl versehen (vgl. z. B. DE-B 19 39 240). Nicht erfüllt wird jedoch die letztgenannte Forderung — geringe Anfälligkeit gegen Beschuß — da Laufräder aus Aluminium bei Beschuß häufig schmelzen oder sogar brennen.

Laufräder aus Stahl erfüllen die letztgenannte Forderung ohne weiteres. Die Verschleißfestigkeit im Zahneingriffsbereich wird bei einem bekannten Laufrad aus Stahl durch einen Polyamidkunststoff herbeigeführt (DE-B 12 01 693). Laufräder aus Stahl haben jedoch ein verhältnismäßig hohes Gewicht.

Der Erfindung liegt die Aufgabe zugrunde, ein Laufrad aus Stahl so auszubilden, daß auch dessen Gewicht der gestellten Forderung entspricht.

Die Aufgabe wird bei einem Laufrad der eingangs genannten Art dadurch gelöst, daß jede Hälfte aus einer Radschüssel besteht, die durch Drücken und Projizierstreckdrücken aus einer ebenen Ronde mit einer bestimmten Dicke hergestellt ist, wobei die Radschüssel einen als Hohlzylinder um die Radachse verlaufenden Laufbereich, einen sich daran zur Radachse hin anschließenden, leicht konischen Zahneingriffsbereich, einen sich daran anschließenden, stärker konischen Übergangsbereich sowie einen ebenen, konzentrisch zur Radachse verlaufenden Nabenbereich aufweist, und wobei die Wandstärken des Zahneingriffsbereichs und des Übergangsbereichs der mit dem Cosinus des jeweiligen Projizierwinkels multiplizierten Dicke der Ronde entsprechen, während die Wandstärke des Laufbereichs zwischen 0,6 und 0,8 der Dicke der Ronde beträgt und die Wandstärke des Nabenbereichs durch spanabhebende Bearbeitung auf 0,5 bis 0,7 der Dicke der Ronde vermindert ist.

Durch die Gestaltung des erfindungsgemäßen Laufrades und die Anpassung der Wandstärken der einzelnen Bereiche des Laufrades an die zu erwartende Belastung wird dessen Gewicht — bei Aufrechterhaltung der erforderlichen Festigkeit — auf ein ausreichend niedriges Maß vermindert.

Darüber hinaus ist das erfindungsgemäße Laufrad außerordentlich preiswert herzustellen.

Zweckmäßigerweise beträgt die Wandstärke des Laufbereichs 0,7 und die Wandstärke des Nabenbereichs 0,6 der Dicke der Ronde.

Eine ausreichend hohe Verschleißfestigkeit im Zahneingriffsbereich kann bei dem erfindungsgemäßen Laufrad durch eine entsprechende Wärmebehandlung der Verschleißzone herbeigeführt werden. Bei dieser Ausführungsform der Erfindung entfällt ein zusätzliches Teil, das beim Lösen die Gefahr des Verklemmens der Kette im Laufrad birgt.

Bei einer anderen Ausführungsform der Erfindung ist die Wandstärke des Zahneingriffsbereichs durch spanabhebende Bearbeitung auf 0,5 bis 0,7 der Dicke der Ronde vermindert und ist auf die Radschüssel ein sich über den äußeren Teil des Zahneingriffsbereichs und den daran angrenzenden Teil des Laufrades erstreckender, winkelförmiger Verschleißring aufgebracht, wobei zweckmäßigerweise der Zahneingriffsbereich eine Wandstärke von 0,6 der Dicke der Ronde aufweist.

In weiterer Ausgestaltung der Erfindung ist derjenige Teil des Laufbereichs, über den sich der Verschleißring erstreckt, zur Radachse hin eingezogen, derart, daß der Außendurchmesser um die doppelte Wandstärke eines Verschleißringes vermindert ist, und daß der Außendurchmesser einen Paßsitz aufweist, so daß die äußere zylindrische Fläche des Verschleißringes mit der äußeren zylindrischen Fläche des Laufbereichs fluchtet.

Die Herstellung eines erfindungsgemäßen Laufrades erfolgt vorteilhafterweise nach dem im Anspruch 6 (Laufrad ohne Verschleißring) oder dem im Anspruch 7 (Laufrad mit Verschleißring) angegebenen Verfahren.

Das erfindungsgemäße Laufrad ist anhand der Zeichnung, in der jeweils der untere Teil der rechten Hälfte eines Laufrades in einem Vertikalschnitt dargestellt ist, näher erläutert. Es zeigen :

Fig. 1 das Laufrad nach dem Drücken und Projiziersreckdrücken ;

Fig. 2 das Laufrad gemäß Fig. 1 nach dem Abdrehen bestimmter Bereiche ;

Fig. 3 ein anderes Laufrad, nach dem Drücken und Projizierstreckdrücken und dem Abdrehen bestimmter Bereiche.

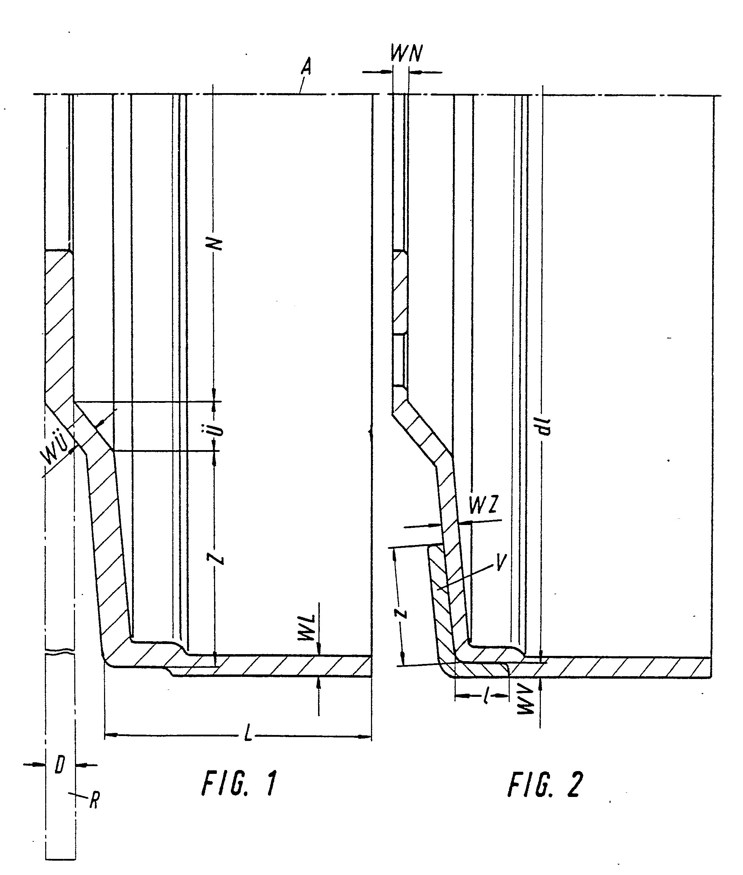

Die in Fig. 1 dargestellte Hälfte des Laufrades besteht aus einer Radschüssel, die durch Drücken und Projizierstreckdrücken aus einer — mit strichpunktierten Linien angedeuteten — ebenen Ronde R mit einer bestimmten Dicke D hergestellt ist. Die Radschüssel weist einen als Hohlzylinder um die Radachse A verlaufenden Laufbereich L, einen sich daran zur Radachse hin anschließenden, leicht konischen Zahneingriffsbereich Z, einen sich daran anschließenden, stärker konischen Übergangsbereich Ü sowie einen ebenen, konzentrisch zur Radachse A verlaufenden Nabenbereich N auf. Durch Drücken und Projizierstreckdrücken ist die Wandstärke WL des Laufbereichs L auf 0,6 bis 0,8 der Dicke D der Ronde R und die Wandstärke WÜ des Übergangsbereichs Ü auf die mit dem Cosinus des Projizierwinkels multiplizierte Dicke D der Ronde R verringert worden.

Bei der in Fig. 2 dargestellten Hälfte des Laufrades sind die Wandstärke WZ des Zahneingriffsbereichs Z und die Wandstärke WN des Nabenbereichs N auf 0,5 bis 0,7 der Dicke D der Ronde R abgedreht worden. In diesem Falle ist auf die Radschüssel ein winkelförmiger Verschleißring V aufgebracht, dessen einer Schenkel sich über den äußeren Teil z des Zahneingriffsbereichs Z und dessen anderer Schenkel sich über den daran angrenzenden Teil 1 des Laufbereichs L erstreckt. Der Teil 1 des Laufbereichs L, über den sich der Verschleißring V erstreckt, ist derart zur Radachse A hin eingezogen, daß der Außendurchmesser dl des Teils 1 des Laufbereichs L um die doppelte Wandstärke WV des Verschleißrings V vermindert ist, so daß die äußere zylindrische Fläche des Verschleißrings V mit der äußeren zylindrischen Fläche des Laufbereichs L fluchtet.

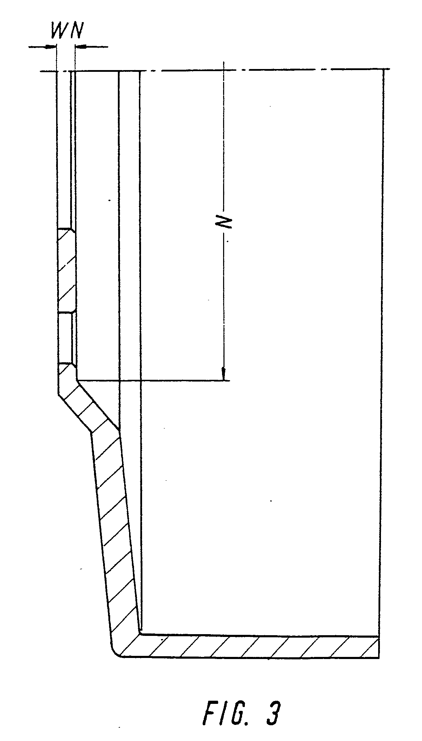

In Fig. 3 ist eine Laufradhälfte dargestellt, die nicht für das Aufbringen eines Verschleißringes vorgesehen ist. Diese Laufradhälfte besteht aus einer Radschüssel, die durch Drücken und Projizierstreckdrücken aus einer ebenen Ronde hergestellt ist und bei der sodann die Wandstärke WN des Nabenbereichs N auf 0,5 bis 0,7 der Dicke der Ronde abgedreht worden ist.


**Patentansprüche**

1. Aus zwei Hälften gebildetes Laufrad aus Stahl für Kettenfahrzeuge, dadurch gekennzeichnet, daß jede Hälfte aus einer Radschüssel besteht, die durch Drücken und Projizierstreckdrücken aus einer ebenen Ronde (R) mit einer bestimmten Dicke (D) hergestellt ist, wobei die Radschüssel einen als Hohlzylinder um die Radachse (A) verlaufenden Laufbereich (L), einen sich daran zur Radachse (A) hin anschließenden, leicht konischen Zahneingriffsbereich (Z), einen sich daran anschließenden, stärker konischen Übergangsbereich (Ü) sowie einen ebenen, konzentrisch zur Radachse (A) verlaufenden Nabenbereich (N) aufweist, und wobei die Wandstärken (WZ, WÜ) des Zahneingriffsbereichs (Z) und des Übergangsbereichs (Ü) der mit dem Cosinus des jeweiligen Projizierwinkels multiplizierten Dicke (D) der Ronde (R) entsprechen, während die Wandstärke (WL) des Laufbereichs (L) zwischen 0,6 und 0,8 der Dicke (D) der Ronde (R) beträgt und die Wandstärke (WN) des Nabenbereichs (N) durch spanabhebende Bearbeitung auf 0,5 bis 0,7 der Dicke (D) der Ronde (R) vermindert ist.

2. Laufrad nach Anspruch 1, dadurch gekennzeichnet, daß die Wandstärke (WL) des Laufbereichs (L) 0,7 und die Wandstärke (WN) des Nabenbereichs (N) 0,6 der Dicke (D) der Ronde (R) beträgt.

3. Laufrad nach Anspruch 1 oder 2, dadurch gekennzeichnet, daß die Wandstärke (WZ) des Zahneingriffsbereichs (Z) durch spanabhebende Bearbeitung auf 0,5 bis 0,7 der Dicke (D) der Ronde (R) vermindert ist und daß auf die Radschüssel ein sich über den äußeren Teil (z) des Zahneingriffsbereichs (Z) und den daran angrenzenden Teil (1) des Laufbereichs (L) erstreckender, winkelförmiger Verschleißring (V) aufgebracht ist.

4. Laufrad nach Anspruch 3, dadurch gekennzeichnet, daß der Zahneingriffsbereich (Z) eine Wandstärke (WZ) von 0,6 der Dicke (D) der Ronde (R) aufweist.

5. Laufrad nach Anspruch 3 oder 4, dadurch gekennzeichnet, daß derjenige Teil (1) des Laufbereichs (L), über den sich der Verschleißring (V) erstreckt, zur Radachse (A) hin eingezogen ist, derart, daß der Außendurchmesser (dl) um die doppelte Wandstärke (WV) eines Verschleißringes (V) vermindert ist, und daß der Außendurchmesser (dl) einen Paßsitz aufweist.

6. Verfahren zur Herstellung eines aus zwei Hälften gebildeten Laufrades aus Stahl für Kettenfahrzeuge, dadurch gekennzeichnet, daß aus einer ebenen Ronde (R) mit einer bestimmten Dicke (D) durch Drücken und Projizierstreckdrücken eine der Form der herzustellenden Hälfte des Laufrades entsprechende Radschüssel gebildet wird, die einen als Hohlzylinder um die Radachse (A) verlaufenden Laufbereich (L), einen sich daran zur Radachse (A) hin anschließenden, leicht konischen Zahneingriffsbereich (Z), einen sich daran anschließenden, stärker konischen Übergangsbereich (Ü) sowie einen ebenen, konzentrisch zur Radachse (A) verlaufenden Nabenbereich (N) aufweist, wobei die Wandstärken (WZ, WÜ) des Zahneingriffsbereichs (Z) und des Übergangsbereichs (Ü) der mit dem Cosinus des jeweiligen Projizierwinkels multiplizierten Dicke (D) der Ronde (R) entsprechen und daß sodann die Wandstärke (WN) des Nabenbereichs (N) durch spanabhebende Bearbeitung auf 0,5 bis 0,7 der Dicke (D) der Ronde (R) vermindert wird.

7. Verfahren zur Herstellung eines aus zwei Hälften gebildeten Laufrades aus Stahl für Kettenfahrzeuge, dadurch gekennzeichnet, daß aus einer ebenen Ronde (R) mit einer bestimmten Dicke (D) durch Drücken und Projizierstreckdrücken eine der Form der herzustellenden Hälfte des Laufrades entsprechende Radschüssel gebildet wird, die einen als Hohlzylinder um die Radachse (A) verlaufenden Laufbereich (L), dessen dem Radinnern zugewandter Teil (1) zur Radachse (A) hin derart eingezogen ist, daß der Außendurchmesser (dl) um die doppelte Wandstärke (WV) eines Verschleißringes (V) vermindert ist, einen sich daran zur Radachse (A) hin anschließenden, leicht konischen Zahneingriffsbereich (Z), einen sich daran anschließenden, stärker konischen Übergangsbereich (Ü) sowie einen ebenen, konzentrisch zur Radachse (A) verlaufenden Nabenbereich (N) aufweist, wobei die Wandstärken (WZ, WÜ) des Zahneingriffsbereichs (Z) und des Übergangsbereichs (Ü) der mit dem Cosinus des jeweiligen Projizierwinkels multiplizierten Dicke (D) der Ronde (R) entsprechen, und daß sodann die Wandstärken (WN, WZ) des Nabenbereichs (N) und des Zahneingriffsbereichs (Z) durch spanabhebende Bearbeitung auf 0,5 bis 0,7 der Dicke (D) der Ronde (R) vermindert werden, während der Außendurchmesser (dI) des eingezogenen Teils (1) des Laufbereichs (L) durch spanabhebende Bearbeitung mit einem Paßsitz versehen wird, und daß schließlich ein winkelförmiger Verschleißring (V) aufgebracht wird, dessen waagerechter Schenkel sich über den eingezogenen Teil (1) des Laufbereichs (L) erstreckt.

## Claims

1. Steel roller for tracked vehicles formed of two halves, characterised in that each half consists of a wheel disc which has been made by pressing and projection stretch pressing from a flat blank (R) with a pre-determined thickness (D), so that the wheel disc consists of a running region (L) running as a hollow cylinder about the wheel axis (A), a slightly conical teeth engagement region (Z) directed toward the wheel axis (A), a more steeply conical transfer region (Ü) adjacent the latter as well as a flat hub region (N) running concentrically to the wheel axis (A) and so that the wall thicknesses (WZ, WÜ) of the teeth engagement region (Z) and the transfer region (Ü) correspond with the thickness (D) of the disc (R), multiplied by the cosine of the projection angle, whereas the wall thickness (WL) of running region (L) amounts to between 0.6 and 0.8 times the thickness (D) of the blank (R) and the wall thickness (WN) of the hub region (N) is reduced by chip-removing machining to 0.5 to 0.7 times the thickness (D) of the blank (R).

2. Roller according to claim 1, characterised in that the wall thickness (WL) of the running region (L) amounts to 0.7 times and the wall thickness (WN) of the hub region (N) to 0.6 times the thickness (D) of the blank (R).

3. Roller according to claim 1 or 2, characterised in that the wall thickness (WZ) of the teeth engagement region (Z) is reduced by chip-removing machining to 0.5 to 0.7 times the thickness (D) of the blank (R) and that an angular wear ring (V) extending over the outer part (z) of the teeth engagement region (Z) and the limiting part (1) of the running region (L) is provided on the wheel disc.

4. Roller according to claim 3, characterised in that the teeth engagement region (Z) has a wall thickness (WZ) of 0.6 times the thickness (D) of the blank (R).

5. Roller according to claim 3 or 4, characterised in that part (1) of the running region (L) over which the wear ring (V) extends is directed toward the wheel axis (A) so that the outer diameter (dI) is reduced by double the wall thickness (WV) of a wear ring (V) and that the outer diameter (dI) includes a press fit.

6. Method for the manufacture of a steel roller for tracked vehicles formed of two halves, characterised in that a wheel disc corresponding to the form of the half of the roller to be manufactured is formed from a flat blank (R) with a pre-determined thickness (D) by pressing and projection stretch pressing, which has a running region (L) running as a hollow cylinder about the wheel axis (A), a slightly conical teeth engagement region (Z) adjacent the wheel axis (A), a more steeply conical transfer region (Ü) adjacent thereto as well as a flat hub region (N) running concentrically to the wheel axis (A), so that the wall thicknesses (WZ, WÜ) of the teeth engagement region (Z) and the transfer region (Ü) correspond to the thickness (D) of the blank (R) multiplied by the cosine of the projection angle and that the wall thickness (WN) of the hub region (N) is then reduced by chip-removing machining to 0.5 to 0.7 times the thickness (D) of the blank (R).

7. Method for the manufacture of a steel roller for tracked vehicles formed of two halves, characterised in that a wheel disc corresponding to the form of the half of the roller to be manufactured is formed from a flat blank (R) with a pre-determined thickness (D) by pressing and projection stretch pressing, which has a running region (L) running as a hollow cylinder about the wheel axis (A), the part (1) of which facing the interior of the wheel is so directed toward the wheel axis (A) that the outer diameter (dI) is reduced by double the wall thickness (WV) of a wear ring, a slightly conical teeth engagement region (Z) adjacent the wheel axis (A), a more steeply conical transfer region (Ü) adjacent thereto as well as a flat hub region (N) running concentrically to the wheel axis (A), so that the wall thickness (WZ, WÜ) of the teeth engagement region (Z) and the transfer region (Ü) correspond to the thickness (D) of the blank (R) multiplied by the cosine of the projection angle and that the wall thicknesses (WN, WZ) of the hub region (N) and of the teeth engagement region (Z) are reduced by chip-removing machining to 0.5 to 0.7 times the thickness (D) of the blank (R), whereas the outer diameter (dI) of the inward part (1) of the rolling region (L) is provided by chip-removing working with a press fit and that an angular wear ring (V) is finally applied whose horizontal limb extends over the inward region (1) of the running region (L).

## Revendications

1. Galet de roulement en deux moitiés, en acier, pour véhicule chenillé, caractérisé en ce que chaque moitié est constituée d'un plat de roulement qui est obtenu par emboutissage et étirage par projection à partir d'un rond plat (R) d'une épaisseur déterminée (D), le plat de roulement présentant une zone de roulement (L) sous la forme d'un cylindre creux entourant l'axe de roulement (A), une zone d'attaque des dents (Z) légèrement conique s'y raccordant vers l'axe de roulement (A), une zone de transition plus fortement conique (Ü) s'y raccordant, ainsi qu'une partie de moyeu plane et concentrique par rapport à l'axe de galet (A) et dans lequel les épaisseurs de paroi (WZ-WÜ) de la zone d'attaque des dents (Z) et de la zone de transition (Ü) correspondent à épaisseur (D) du rond (R), multipliée par le cosinus de l'angle de projection considéré, tandis que l'épaisseur de paroi (WL) de la zone de roulement (L) est comprise entre 0,6 et 0,8 de l'épaisseur (D) du rond (R) et que l'épaisseur de paroi (WN) de la partie du moyeu (N) est ramenée par usinage par enlèvement de matière à 0,5-0,7 de l'épaisseur (D) du rond (R).

2. Galet de roulement selon la revendication 1, caractérisé en ce que l'épaisseur de paroi (WL) de la zone de roulement (L) est égale à 0,7, et l'épaisseur de paroi (WN) de la zone du moyeu (N) est égale à 0,6 de l'épaisseur (D) du rond (R).

3. Galet de roulement selon la revendication 1 ou 2, caractérisé en ce que l'épaisseur de paroi (WZ) de la zone d'attaque des dents (Z) est ramenée par usinage par enlèvement de matière à 0,5-0,7 de l'épaisseur (D) du rond (R) et en ce qu'une bague d'usure de forme angulaire, s'étendant au-dessus de la partie extérieure (z) de la zone d'attaque des dents (Z) et de la zone (1) qui lui est contiguë, de la zone de roulement (L), est disposée sur le plat de roulement.

4. Galet de roulement selon la revendication 3, caractérisé en ce que la zone d'attaque des dents (Z) présente une épaisseur de paroi (WZ) égale à 0,6 de l'épaisseur (D) du rond (R).

5. Galet de roulement selon la revendication 3 ou 4, caractérisé en ce que la partie (1) de la zone de roulement (L) au-dessus de laquelle s'étend la bague d'usure (V), est en retrait vers l'axe de galet (A), de manière telle que le diamètre extérieur (dI) est diminué du double de l'épaisseur de paroi (WV) d'une bague d'usure (V), et en ce que le diamètre extérieur (dI) présente une faible tolérance.

6. Procédé de fabrication d'un galet de roulement en acier, formé de deux moitiés, pour véhicule chenillé, caractérisé en ce qu'un plat de roulement correspondant à la forme de la moitié du galet de roulement à fabriquer est formé à partir d'un rond plat (R) d'une épaisseur déterminée (D) par pression et étirage par projection, le dit plat de roulement présentant une zone de roulement (L) en forme de cylindre creux autour de l'axe de galet (A), une zone d'attaque des dents Z légèrement conique s'y raccordant vers l'axe de galet (A), une zone de transition (Ü) plus fortement conique s'y raccordant, ainsi qu'une partie de moyeu plane et concentrique par rapport à l'axe de galet (A), les épaisseurs de paroi (WZ, WÜ) de la zone d'attaque des dents (Z) et de la zone de transition (Ü) correspondant à l'épaisseur (D) du rond (R), multipliée par le cosinus de l'angle de projection correspondant et en ce que l'épaisseur de paroi (WN) de la partie du moyeu (N) est ramenée par usinage par enlèvement de matière, à 0,5-0,7 de l'épaisseur (D) du rond (R).

7. Procédé de fabrication d'un galet de roulement en acier formé de deux moitiés, pour véhicule chenillé, caractérisé en ce qu'un plat de roulement correspondant à la forme de la moitié du galet de roulement à fabriquer est formé à partir d'un rond plat (R) d'une épaisseur déterminée (D) par emboutissage et étirage par projection, le dit plat de roulement présentant une zone de roulement (L) entourant l'axe de galet (A) sous la forme d'un cylindre creux, zone dont la partie (1) tournée vers l'intérieur du galet est en retrait vers l'axe de galet (A) de manière telle que le diamètre extérieur (dI) est diminué du double de l'épaisseur de paroi (WV) d'une bague d'usure (V), une zone d'attaque des dents légèrement conique (Z) s'y raccordant vers l'axe de galet (A), une zone de transition plus fortement conique (Ü) s'y raccordant, ainsi qu'une partie de moyeu plane et concentrique par rapport à l'axe de galet (A), les épaisseurs de paroi (WZ-WÜ), de la zone d'attaque des dents (Z) et de la zone de transition (Ü) correspondant à l'épaisseur (D) du rond (R) multipliée par le cosinus de l'angle de projection en question, et en ce que les épaisseurs de paroi (WN, WZ) de la partie de moyeu (N) et de la zone d'attaque des dents (Z) sont ramenées, par usinage par enlèvement de matière, à 0,5-0,7 de l'épaisseur (D) du rond (R), tandis que le diamètre extérieur (dI) de la partie rentrante (I) de la zone de roulement (L) est dotée par usinage par enlèvement de matière d'une faible tolérance et en ce que, enfin, on prévoit une bague d'usure (V) de forme angulaire, dont la branche horizontale s'étend sur la partie rentrante (1) de la zone de roulement (L).

FIG. 1

FIG. 2

FIG. 3